# EUROPÄISCHE PATENTSCHRIFT

(11) **EP 0 578 199 B1**
(45) Veröffentlichungstag und Bekanntmachung des Hinweises auf die Patenterteilung: **06.03.1996**
(21) Anmeldenummer: 93110785.8
(22) Anmeldetag: 06.07.1993
(51) Int. Cl.: B27D 5/00, B23D 45/20

(54) **Durchlaufmaschine zur Bearbeitung von Kantenstreifen plattenförmiger Werkstücke**
Pass-through machine for working edge-strips of plate-like workpieces
Appareil de traitement en continu pour travailler des bandes de bords de panneaux

(30) Priorität: 08.07.1992 DE 4222300
(43) Veröffentlichungstag der Anmeldung: 12.01.1994
(73) Patentinhaber: IMA-Norte Maschinenfabriken Klessmann GmbH & Co., D-33334 Gütersloh (DE)
(72) Erfinder: Riesmeier, Wilhelm, Ing. (grad.), D-32312 Lübbecke (DE)
(74) Vertreter: Elbertzhagen, Otto

(56) Entgegenhaltungen:
- EP-A- 0 483 499
- DE-A- 2 553 042
- DE-U- 9 013 430
- FR-A- 2 084 411
- GB-A- 1 235 477

## Beschreibung

Die Erfindung bezieht sich auf eine Maschine der im Gattungsbegriff des Patentanspruchs 1 näher bezeichneten Art.

Bei bekannten Durchlaufmaschinen dieser Art sind die einzelnen Fräs- und Kappaggregate an mehreren Stationen getrennt voneinander hintereinander in Durchlaufrichtung angeordnet, wobei insbesondere auch die Kappaggregate als eigenständige Aggregategruppen ausgebildet sind; vgl. DE-Prospekt "IMA-Kantenverleim- und -nachbearbeitungsmaschine AVM für gerade und profilierte Kanten und für Holzleisten".Die Kappaggregate haben die Aufgabe, die Überstände der Kantenstreifen an den durchlaufenden Werkstücken, soweit es die in Durchlaufrichtung vorn- und hintenliegenden Seiten betrifft, abzutrennen, was ein Mitführen der Kappaggregate mit den Werkstücken in Durchlaufrichtung erforderlich macht. Bei den Fräsaggregaten, die ein Bündigfräsen der Kantenstreifen mit den Ober- und den Unterseiten der Werkstücke besorgen, ist ein Mitführen mit den durchlaufenden Werkstücken nicht erforderlich, allerdings macht das Nachführen der Fräsaggregate entlang den Ober- und den Unterseiten der Werkstücke zum Ausgleich von Dickentoleranzen oder Höhenschlägen eine Höhenverschiebbarkeit der Fräsaggregate notwendig. Die Anordnung der einzelnen Aggregate oder Aggregategruppen an hintereinander liegenden Stationen der Durchlaufmaschine bedingt einen großen Aufbauplatz, entsprechend aufwendig sind der Materialeinsatz und damit die Fertigungskosten einer solchen Maschine.

Aufgabe der Erfindung ist es deshalb, eine Maschine der gattungsbildenden Art zu schaffen, bei der die im Durchlauf mitzuführenden Kappaggregate mit den Fräsaggregaten kombiniert werden, um einen Platzvorteil und eine Kosteneinsparung zu erzielen.

Diese Aufgabe wird bei einer Maschine der gattungsgemäßen Art nach der Erfindung durch die kennzeichnenden Merkmale des Patentanspruchs 1 gelöst.

Für die Erfindung ist wesentlich, daß die an sich bezogen auf den Durchlauf der Werkstücke durch die Maschine unterschiedlich zu steuernden Fräs- und Kappaggregate auf einem gemeinsamen Aggregateträger, dem Schlitten, angeordnet sind, dessen Lage oder Bewegung relativ zu den durchlaufenden Werkstücken dem jeweils erforderlichen Aggregateinsatz angepaßt wird. Somit kann die Kantenbearbeitung an nur einer einzigen Station der Durchlaufmaschine erfolgen.

Da das Fräsaggregat auf dem jeweiligen Schlitten nur entweder auf die Oberkante oder die Unterkante der zu besäumenden Kantenstreifen an den Schmalflächen der Werkstücke ausgerichtet sein kann, ist es zweckmäßig, an der Kantenbearbeitungsstation der Maschine in Durchlaufrichtung zwei Schlitten mit jeweils einem Fräsaggregat sowie einem Kappaggregat hintereinander vorzusehen. Hierbei ist das Fräsaggregat des einen Schlittens auf die Unterkante der Kantenstreifen an den Werkstücken und das Fräsaggregat des anderen Schlittens auf deren Oberkante ausgerichtet. Entsprechend kann auch das Kappaggregat des einen Schlittens dem in Durchlaufrichtung rückwärtigen Überstand und das Kappaggregat des anderen Schlittens dem in Durchlaufrichtung vorderen Überstand zugeordnet werden.

In vorteilhafter Anordnung nach der Erfindung sind auf den beiden Schlitten relativ zueinander die Fräsaggregate und die Kappaggregate spiegelbildlich angeordnet, so daß das Fräsaggregat und das Kappaggregat des einen Schlittens in umgekehrter Folge hintereinander in Durchlaufrichtung gesehen zu denen des anderen Schlittens liegen.

Die Fräsaggregate können über Kopiertaster oder dergleichen in Höhenrichtung, also senkrecht zur Plattenebene der durchlaufenden Werkstücke, verfahrbar sein, um ein Nachfahren von Rundungen an den in Durchlaufrichtung vorderen und/oder hinteren Schmalflächenseiten der Werkstücke zu ermöglichen. Dafür ist vorteilhaft, daß die Schlitten, auf denen jeweils ein Fräsaggregat und ein Kappaggregat gemeinsam angeordnet sind, ohnehin für die Funktion des Kappaggregates in Durchlaufrichtung mit den Werkstücken mitführbar ist. Aufgrund dieser Beweglichkeit des gemeinsamen Schlittens kann die beim Kantenrunden erforderliche Relativbewegung zwischen dem Fräsaggregat und dem durchlaufenden Werkstück so eingestellt werden, daß sich optimale Schnittbedingungen ergeben. Grundsätzlich kann beim vorgesehenen Rundungsfräsen auch das jeweilige Kappaggregat zum Einsatz kommen, wenn ein Vorschnitt der vorderen und der hinteren Überstände des Kantenstreifens an den Werkstücken Zweckmäßig ist. Kann dagegen der Kappvorgang entfallen, erübrigt sich ein Mitführen der Kappaggregate in Durchlaufrichtung der Werkstücke, wozu dann die Kappaggregate auf einem von dem jeweiligen Schlitten abkuppelbaren Teilschlitten angeordnet sein können, der beim Bündig- und Rundungsfräsen der Fräsaggregate unter teilweisem Mitführen mit den durchlaufenden Werkstücken abgekuppelt ist.

Die Erfindung wird nachfolgend anhand der Zeichnung an Ausführungsbeispielen noch näher erläuert. Dabei zeigen:
- Fig 1: eine schematische Draufsicht von im Durchlauf zu bearbeitenden, plattenförmigen Werkstücken mit an einer Schmalflächenseite angeleimtem Kantenstreifen,
- Fig 2: eine Ansicht solcher Werkstücke von der Schmalflächenseite her mit rechtwinklig ebener vorderer und hinterer Schmalseite,
- Fig 3: eine Ansicht solcher Werkstücke von der Schmalflächenseite her gesehen mit gerundeter vorderer und hinterer Schmalseite und
- Fig 4: eine schematische Seitansicht einer Durchlaufmaschine zum allseitigen Beseitigen der Überstände des jeweiligen Kantenstreifens an den Werkstücken nach den Fig 1 bis 3.

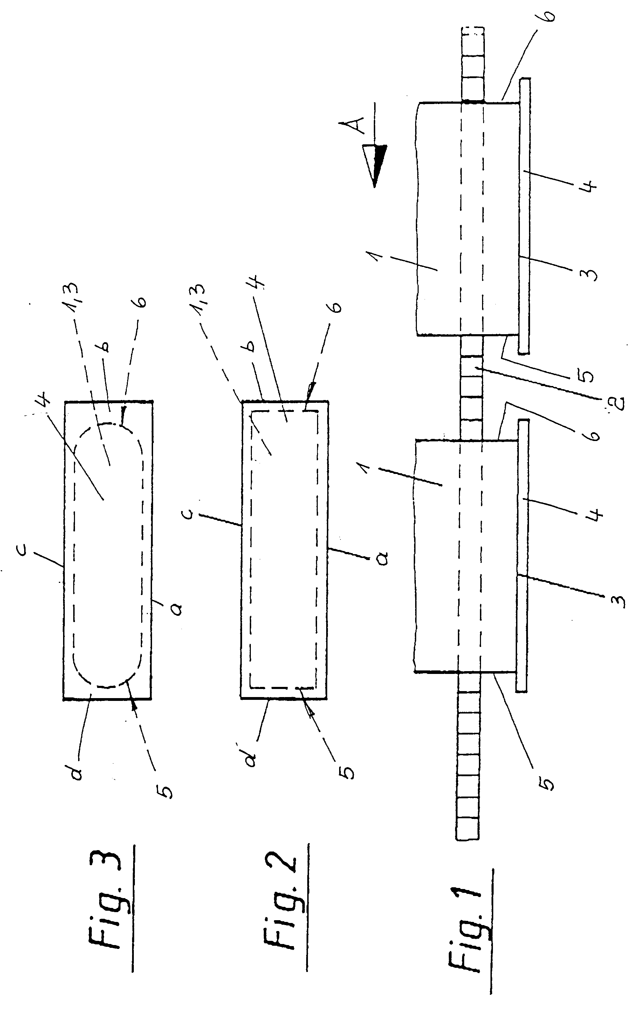

In Fig 1 erkennt man in der Draufsicht plattenförmige Werkstücke 1, die einen rechteckförmigen oder quadratischen Umriß haben. Auf einer Transportvorrichtung 2, wie einem Kettenförderer, werden die Werkstücke 1 in der Transportrichtung gemäß dem Pfeil "A" befördert, um an ihrer über die Transportvorrichtung 2 seitlich überstehenden Schmalflächenseite 3 eine spangebende Bearbeitung vorzunehmen.

Auf diese Schmalflächenseite 3 der Werkstücke 1 ist ein Kantenstreifen 4 aufgeleimt, der nach oben und unten sowie nach vorn und hinten Überstande aufweist, was aus den Fig 2 und 3 hervorgeht. Das Werkstück 1 nach Fig 1 hat eine vordere Schmalseite 5 und eine rückwärtige Schmalseite 6 bezogen auf die Durchlaufrichtung A, die rechtwinklig zu den übrigen Plattenseiten des Werkstücks 1 stehen. Bei einem derartigen Werkstück 1 werden die Überstände des Kantenstreifens 4 im Bereich a und c durch Bündigfräsen beseitigt, was mit einem Fräsaggregat geschieht, das wegen des Vorbeilaufs der Werkstücke 1 in Durchlaufrichtung gesehen stillstehen kann und lediglich in Höhenrichtung senkrecht zur Plattenebene zum Ausgleich von Höhenschlägen oder dicken Toleranzen durch die Oberseite bzw. die Unterseite des jeweiligen Werkstücks 1 selbst geführt wird. Die Überstände des Kantenstreifens 4 in den Bereichen b und d können entlang einer geraden Trennlinie mittels eines Kappaggregates, das ein Sägeblatt aufweist, abgeschnitten werden, wobei die Sägeblattebene an der benachbarten Seite mit der Ebene der vorderen Werkstückschmalseite 5 bzw. der hinteren Werkstückschmalseite 6 fluchten muß. Dies kann bei einer im Durchlauf arbeitenden Maschine nur vorübergehend eingerichtet werden, wozu das Kappaggregat entlang eines Abschnitts des Durchlaufweges der Werkstücke 1 mitgeführt wird. Auf diesem Wegstück wird das Kappwerkzeug quer zur Durchlaufrichtung A zugestellt und wieder zurückgeführt, so daß es zwar den jeweiligen Überstand des Kantenstreifens 4 bündig abtrennt, jedoch nicht mit dem Werkstück 1 kollidiert.

Das Werkstück 1 nach Fig 3 hat sowohl eine gerundete vordere Schmalseite 5 als auch eine gerundete hintere Schmalseite 6 bezogen auf die Durchlaufrichtung A. In solchen Fällen muß der Überstand des jeweiligen Kantenstreifens 4 in den Bereichen b und d im Rundungs- oder Radiusfräsverfahren beseitigt werden, was nur mit einem Fräswerkzeug vorgenommen werden kann, welches auch senkrecht zur Ebene der plattenförmigen Werkstücke, nämlich in Höhenrichtung verfahren werden kann.

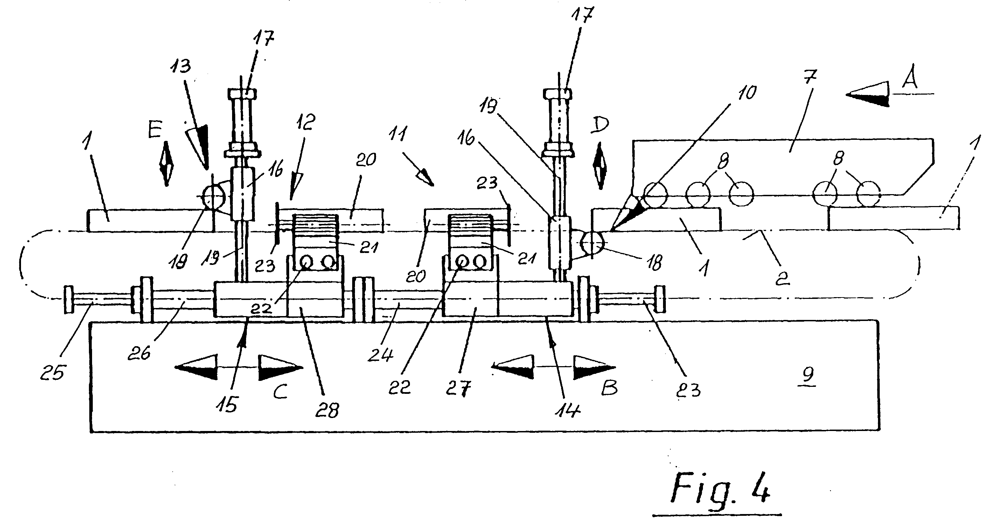

Fig 4 veranschaulicht nun eine Maschine, die mit zwei Kombinationsaggregaten ausgestattet ist, um sowohl die anhand von Fig 2 erläuterte Bearbeitung des Kantenstreifens 4 als auch diejenige vornehmen zu können, wie sie bei der Werkstückausführung nach Fig 3 erforderlich ist.

Die auf der Transportvorrichtung 2 mit seitlichem Überstand beförderten Werkstücke 1 werden durch einen Niederhalter 7 auf der Transportvorrichtung 2 festgehalten, wozu an dem Niederhalter 7 die Werkstücke 1 beaufschlagende Druckrollen 8 angeordnet sind. Der Niederhalter 7 ist auf der Zeichnung nur schematisch an einer Stelle dargestellt, er befindet sich überall dort, wo ein Abheben der Werkstücke 1 von der Transportvorrichtung 2 unterbunden werden soll. Die Maschine 1 weist ein Gestell 9 auf, an dem die Transportvorrichtung 2, der Niederhalter 7 und weitere, nachstehend erörterte Aufbauten angeordnet sind, wobei lediglich eine prinzipielle Darstellung gewählt wurde.

In der Durchlaufrichtung A passieren die Werkstücke 1 ein erstes Fräsaggregat 10 sowie ein erstes Kappaggregat 11 und ein zweites Kappaggregat 12 sowie ein zweites Fräsaggregat 13. Das erste Fräsaggregat 10 und das erste Kappaggregat 11 sind auf einem gemeinsamen Schlitten 14 angeordnet, und entsprechend mit diesem zusammen parallel zur Durchlaufrichtung A verfahrbar, wie durch den darunter dargestellten Pfeil B angedeutet. Der gemeinsame Schlitten 14 ist dazu auf einer Führung 24 gelagert und wird über einen Pneumatikzylinder 23 gesteuert. Auf dem Schlitten 14 ist eine Führung 19 aufgebaut, die senkrecht zu der Förderebene der plattenförmigen Werkstücke 1 und zu der Führung 24 des gemeinsamen Schlittens 14 steht und auf der ein durch einen Pneumatikzylinder 17 betätigter Support 16 höhenverfahrbar gelagert ist. An diesem Support 16 sitzt ein motorbetriebenes Fräswerkzeug 18 zusammen mit einer Tastkufe oder einem Tastrad, welches zum Abtasten der Unterseite der Werkstücke 1 dient, um das Fräswerkzeug 18 mit dieser Seite bündig nachführen zu können. Dies kann mittels des Tastsignals über den Pneumatikzylinder 17 erfolgen, grundsätzlich kann das Fräswerkzeug 18 der betreffenden Seite der Werkstücke 1 auch mechanisch nachgeführt werden.

Die Nachführung des Fräswerkzeugs 18 ist erforderlich, um den Überstand der Kantenstreifen 4 an den Werkstücken 1 bündig mit deren Unterseite abtragen zu können; dies trifft den Bereich "a", vergl. hierzu Fig 2 und 3.

Auf dem Schlitten 14 sitzt ferner eine Querführung 22 mit einem weiteren Support 21, der auf der Führung 22 parallel zur Ebene der plattenförmigen Werkstücke 1, also senkrecht zur Darstellungsebene, verfahrbar ist. Der Support 21 ist Teil des Kappaggregates 11, welches ferner einen Antriebsmotor 20 und ein Kappwerkzeug 23 in Gestalt eines Sägeblattes aufweist. Bezogen auf die Durchlaufrichtung A ist das Kappaggregat 11 auf dem Schlitten 14 hinter dem Fräsaggregat angeordnet, so daß es bei einem erforderlichen Kappvorgang zeitlich erst nach dem Fräsaggregat 10 zum Einsatz kommen kann. Hat das Fräsaggregat 10 an der Unterseite des betreffenden Werkstücks 1 den Überstand des Kantenstreifens 4 im Bereich a bündig mit der Unterseite des Werkstücks 1 abgetragen, wird anschließend mittels des Kappaggregates 11 der Überstand des Kantenstreifens 4 im Bereich b abgeschnitten, vergl. Fig 2. Für den Kappvorgang ist ein Mitführen des Kappaggregates 11 mit dem durchlaufenden Werkstück 1 erforderlich, dazu wird der Schlitten 14 auf einer Führung 24 durch einen Pneumatikzylinder 23 angetrieben verfahren.

Das Kappaggregat 12 und das Fräsaggregat 13 sind in analoger Weise auf einem zweiten Schlitten 15 angeordnet, der bezogen auf die Durchlaufrichtung A hinter dem ersten Schlitten 14 angeordnet ist. Der zweite Schlitten 15 sitzt auf einer mit der Führung 24 des ersten Schlittens 14 fluchtenden Führung 26 und wird von einem weiteren Pneumatikzylinder 25 angetrieben. Soweit es den Aufbau auf dem zweiten Schlitten 15 betrifft, sind für mit dem Schlitten 14 gleiche Bauteile die gleichen Bezugsziffern verwendet. Die Gesamtanordnung des Aufbaus auf dem zweiten Schlitten 15 ist spiegelbildlich zu dem Aufbau auf dem Schlitten 14, weswegen hier in Durchlaufrichtung A gesehen, das Kappaggregat 12 vor dem Fräsaggregat 13 angeordnet ist. Hier dient das Fräsaggregat 13 zum Bündigfräsen der Kantenstreifen 4 an den Oberseiten der Werkstücke 1, es handelt sich um den Bereich c des Kantenstreifens 4 gemäß den Figuren 2 und 3. Mit dem Kappaggregat 13 auf dem zweiten Schlitten 15 wird der in Durchlaufrichtung vorn liegende Überstand des Kantenstreifens 4 im Bereich d abgekappt und gegebenenfalls mit der Vorderseite 5 des Werkstücks 1 bündig geschnitten, soweit es ein Werkstück gemäß Fig 2 betrifft.

Da die Kappaggregate 11 und 12 nicht bei jedem Bearbeitungsvorgang je nach Ausführung der Werkstücke 1 zum Einsatz kommen, können sie auf Schlittenteilen 27, 28 angeordnet sein, die von dem jeweiligen Schlitten 14 bzw. 15 abkuppelbar sind. Entfällt das Kappen, verbleibt der betreffende Schlittenteil 27, 28 mit dem Kappaggregat 11, 12 in einer Parkstellung auf der Führung 24, 26, solange bis bei der Werkstückbearbeitung Kappvorgänge erforderlich sind, wozu dann die Teilschlitten 27 und 28 an die Schlitten 14 und 15 wieder angekuppelt und von diesen mitgeschleppt werden. Grundsätzlich können die Kappaggregate 11 und 12 die Verfahrbewegung der Schlitten 14 und 15 beim Rundungsfräsen der Fräsaggregate 10 und 13 mitmachen, dann jedoch sind während des Rundungsfräsens die Kappaggregate 11, 12 in einer Endlage entgegen der Zustellrichtung fixiert, damit sie nicht mit den daran vorbeigeführten Werkstücken 1 kollidieren können.

Die Folge der Fräsaggregate 10 und 13 sowie der Kappaggregate 11 und 12 bezogen auf die Durchlaufrichtung A kann auf einem der beiden Schlitten 14, 15 oder auf beiden Schlitten 14, 15 gegenüber der in Fig 4 dargestellten Folge geändert werden, was sich nach den Bedarfsfällen richtet. Wichtig ist, daß auf jedem der Schlitten 14 und 15 immer je ein Fräs- und Kappaggregat 10, 11 bzw. 12, 13 angeordnet ist, unabhängig davon, ob das jeweilige Kappaggregat 11,12 auf einem Teilschlitten 27, 28 sitzt oder nicht.

Die Höhenverfahrbarkeit der Fräsaggregate 10, 13 wird insbesondere benötigt, um ein Rundungsfräsen vorzunehmen, wie es zur Abtragung des jeweiligen Kantenstreifens 4 an dem betreffenden Werkstück 1 gemäß Fig 3 in den Bereichen b und d notwendig ist. Hier muß das jeweilige Fräsaggregat 10,13 den gerundeten vorderen Schmalseiten 5 und rückwärtigen Schmalseiten des Werkstücks 1 nachfahren, wozu eine geeignete Relativbewegung zwischen dem betreffenden Werkstück 1 und dem jeweiligen Fräsaggregat 10, 13 eingestellt werden muß. Hierbei ist es vorteilhaft, das Fräsaggregat 10, 13 mit dem durchlaufenden Werkstück 1 mitlaufen zu lassen, damit man insbesondere im Scheitelbereich der Kantenrundungen noch gute Schnittbedingungen einhalten kann. Um hierbei die Massenbeschleunigungen gering zu halten, können von den Fräsaggregaten 12, 13 über die Teilschlitten 27, 28 die Kappaggregate 11, 12 abgekuppelt werden. Möglich ist auch, bei geeigneter Anordnung der Kappaggregate 11, 12 in Relation zu den Fräsaggregaten 11, 13 auf den Schlitten 14, 15 die Überstände des jeweiligen Kantenstreifens 4 in den Bereichen b und d, vergl. hierzu Fig 3, vorzukappen, um dann mit dem Fräsaggregat 10, 12 unter Vermeidung eines hohen Zerspanungsanteils das Rundungsfräsen vorzunehmen. In jedem Fall muß sich beim Rundungsfräsen einer Bewegung der Werkstücke in Durchlaufrichtung A, gegebenenfalls ergänzt durch ein Verfahren der Schlitten 14 und 15 in Richtung der Pfeile B und C, eine Bewegung der Fräsaggregate 10, 13 in Richtung der Pfeile D, E überlagern, was sowohl im Kopierverfahren als auch mittels einer NC-Steuerung vorgenommen werden kann.

## Patentansprüche

1. Maschine zum spangebenden Bearbeiten von Kantenstreifen (4) an den Schmalflächenseiten (3) plattenförmiger Werkstücke (1), wie Möbelteilen, im Durchlauf mit beim Bearbeitungsvorgang mit den Werkstücken (1) mitlaufenden, auf in sowie entgegen der Durchlaufrichtung (A) verfahrbaren Schlitten quer zur Durchlaufrichtung zustellbar angeordneten Kappaggregaten (11, 12) und mit Fräsaggregaten (10, 13), bei deren Bearbeitungsvorgang sich relativ zu diesen die durchlaufenden Werkstücke (1) bewegen,
dadurch gekennzeichnet,
daß je ein Fräsaggregat (10,13) sowie ein Kappaggregat (11,12) auf einem gemeinsamen Schlitten (14,15) angeordnet sind, der beim Fräsen angehalten ist oder mit einer Relativbewegung zu dem jeweils durchlaufenden Werkstück (1) verfahren wird und der beim Kappen mit dem jeweiligen Werkstück (1) in Durchlaufrichtung mitgeführt wird.

2. Maschine nach Anspruch 1,
dadurch gekennzeichnet,
daß in Durchlaufrichtung zwei Schlitten (14 und 15) mit jeweils einem Fräsaggregat (10,13) sowie einem Kappaggregat (11,12) hintereinander angeordnet sind, von denen das Fräsaggregat (10) des einen Schlittens (14) die Unterkante der Kantenstreifen (4) an den Werkstücken (1) und von denen das Fräsaggregat (13) des anderen Schlittens (15) die Oberkante der Kantenstreifen (4) an den Werkstücken (1) bearbeitet.

3. Maschine nach Anspruch 2,
dadurch gekennzeichnet,
daß das Kappaggregat (11) des einen Schlittens (14) den in Durchlaufrichtung rückwärtigen Überstand des Kantenstreifens (4) an den Werkstücken (1) und das Kappaggregat (12) des anderen Schlittens (15) den in Durchlaufrichtung vorderen Überstand des Kantenstreifens (4) kappt.

4. Maschine nach Anspruch 2 oder 3,
dadurch gekennzeichnet,
daß bei den beiden Schlitten (14, 15) bezogen auf die Durchlaufrichtung die Fräsaggregate (10,13) und die Kappaggregate (11,12) in umgekehrter Folge hintereinander angeordnet sind.

5. Maschine nach Anspruch 4,
dadurch gekennzeichnet,
daß bei dem in Durchlaufrichtung ersten Schlitten (14) das Fräsaggregat (10) vor dem Kappaggregat (11) und bei dem in Durchlaufrichtung zweiten Schlitten (15) das Fräsaggregat (13) hinter dem Kappaggregat (12) angeordnet ist.

6. Maschine nach einem der Ansprüche 1 - 5,
dadurch gekennzeichnet,
daß die Fräsaggregate (10,13) zum Nachfahren von Rundungen an den in Durchlaufrichtung vorderen und/oder hinteren Schmalflächenseiten (5,6) der Werkstücke (1) an einem auf dem zugehörigen Schlitten (13,14) höhenverfahrbaren Support (16) angeordnet sind.

7. Maschine nach Anspruch 6,
dadurch gekennzeichnet,
daß die Kappaggregate (11,12) auf von den Schlitten (14, 15) abkuppelbaren Teilschlitten angeordnet sind, die bei Wegfall der Kappschnitte infolge des Rundungsfräsens der Fräsaggregate (10,13) von den hierbei verfahrenden Schlitten (14,15) abgekuppelt sind.

## Claims

1. Machine for the stock-removing finishing of edge strips (4) along the narrow surface sides (3) of plate-shaped workpieces (1), such as furniture parts, in a continuous run-through process, with cutting assemblies (11,12) which during the finishing process move along with the workpieces (1) and which are mounted adjustable across the run-through direction on slide carriages which can be moved in and against the run-through direction (A), and with milling assemblies (10, 13) during whose finishing process the continuously moving workpieces move relative to same, characterised in that each milling assembly (10,13) and cutting assembly (11,12) are mounted on a common slide carriage (14,15) which during milling is stopped or is provided with a relative movement to each workpiece (1) passing through and which during cutting is guided together with each workpiece (1) in the run-through direction.

2. Machine according to claim 1 characterised in that two slide carriages (14 and 15) each with a milling assembly (10,13) and a cutting assembly (11,12) are mounted one behind the other in the continuous run-through direction whereby the milling assembly (10) of one slide carriage (14) finishes the under edge of the edging strip (4) on the workpieces (1) and the milling assembly (13) of the other slide carriage (15) finishes the top edge of the edging strip (4) on the workpieces (1).

3. Machine according to claim 2 characterised in that the cutting assembly (11) of one slide carriage (14) cuts the trailing overhang of the edge strip (4) on the workpieces (1) and the cutting assembly (12) of the other slide carriage (15) cuts the leading overhang of the edge strip (4) in the continuous run-through direction.

4. Machine according to claim 2 or 3 characterised in that in the case of the two slide carriages (14,15) the milling assemblies (10,13) and the cutting assemblies (11,12) are arranged in reverse sequence behind each other in relation to the run-through direction.

5. Machine according to claim 4 characterised in that in the case of the first slide carriage (14) in the run-through direction the milling assembly (10) is mounted in front of the cutting assembly (11) and in the case of the second slide carriage (15) in the run-through direction the milling assembly (13) is mounted behind the cutting assembly (12).

6. Machine according to one of claims 1 to 5 characterised in that the milling assemblies (10,13) for treating round areas on the front and/or rear narrow surface sides (5,6) of the workpieces (1) in the run-through direction are mounted on a support (16) which is height-adjustable relative to the associated slide carriage (13,14).

7. Machine according to claim 6 characterised in that the cutting assemblies (11,12) are mounted on slide carriage parts which can be uncoupled from the slide carriages (14,15) and which when the cutting sections are omitted owing to the rounded milling of the milling assemblies (10,13) are uncoupled from the slide carriages (14,15) which hereby move.

## Revendications

1. Machine pour traiter par enlèvement de copeaux des bandes de chants (4) sur les tranches (3) de pièces à usiner (1) en forme de plaques, comme éléments de meubles, en passe avec des dispositifs de coupe (11, 12) et de fraisage (10, 13) se déplaçant avec les pièces à usiner (1) lors du traitement et disposés, transversalement par rapport au sens de passage, les pièces à usiner (1) en circulation se mouvant relativement en direction de ceux-ci pendant le traitement,
caractérisée en ce que
chaque dispositif de fraisage (10, 13) est disposé avec un dispositif de coupe (11, 12) sur un chariot commun (14, 15) qui est arrêté lors du fraisage ou est conduit, par mouvement relatif, à la pièce à usiner (1) alors en passe et, lors de la coupe, est conduit dans le sens de passage avec la pièce à usiner en question (1).

2. Machine selon la revendication 1,
caractérisée en ce que
deux chariots (14 et 15) sont disposés l'un derrière l'autre dans le sens de passe, portant chacun un dispositif de fraisage (10, 13) ainsi qu'un dispositif de coupe (11, 12), le dispositif de fraisage (10) de l'un des chariots (14) traite le bord inférieur de la bande de chant (4) des pièces à usiner (1), tandis que le dispositif de fraisage (13) de l'autre chariot (15) traite le bord supérieur de la bande de chant (4) des pièces à usiner (1).

3. Machine selon la revendication 2,
caractérisée en ce que
le dispositif de coupe (11) de l'un des chariots (14) coupe l'extrémité de la bande de chant (4) des pièces à usiner (1) dépassant en arrière dans le sens de passe, tandis que le dispositif de coupe (12) de l'autre chariot (15) coupe l'extrémité de la bande de chant (4) des pièces à usiner (1) dépassant à l'avant dans le sens de passe.

4. Machine selon la revendication 2 ou 3,
caractérisée en ce que,
sur les deux chariots (14, 15), en se référant au sens de passe, les dispositifs de fraisage (10, 13) et les dispositifs de coupe (11, 12) sont disposés les uns derrière les autres en ordre inversé.

5. Machine selon la revendication 4,
caractérisée en ce que
le dispositif de fraisage (10) du chariot (14) placé le premier dans le sens de passe est disposé devant le dispositif de coupe (11), tandis que le dispositif de fraisage (13) du deuxième chariot (15) est disposé derrière le dispositif de coupe (12).

6. Machine selon l'une des revendications 1 à 5,
caractérisée en ce que
les dispositifs de fraisage (10, 13) sont montés chacun sur un support (16) réglable en hauteur sur le chariot (13, 14) correspondant, ceci pour leur permettre de suivre les contours arrondis des chants antérieurs et/ou postérieurs (5, 6) des pièces à usiner (1).

7. Machine selon la revendication 6,
caractérisée en ce que
les dispositifs de coupe (11, 12) sont disposés sur des chariots partiels pouvant être désaccouplés des chariots (14, 15) en l'absence de coupe à la suite du traitement des contours arrondis à l'aide des dispositifs de fraisage (10, 13).
